# EUROPÄISCHE PATENTSCHRIFT

(11) **EP 3 221 608 B1**
(45) Veröffentlichungstag und Bekanntmachung des Hinweises auf die Patenterteilung: **31.07.2019**
(21) Anmeldenummer: 15794072.7
(22) Anmeldetag: 20.10.2015
(51) Int. Cl.: F16D 48/06, F16D 21/02

(54) **VERFAHREN ZUR ANPASSUNG EINES REIBWERTES EINER AUTOMATISIERTEN KUPPLUNG**
METHOD FOR ADJUSTING A FRICTION COEFFICIENT OF AN AUTOMATED CLUTCH
PROCÉDÉ D'ADAPTATION D'UN COEFFICIENT DE FROTTEMENT D'UN EMBRAYAGE AUTOMATIQUE

(30) Priorität: 18.11.2014 DE 102014223468
(43) Veröffentlichungstag der Anmeldung: 27.09.2017
(73) Patentinhaber: Schaeffler Technologies AG & Co. KG, 91074 Herzogenaurach (DE)
(72) Erfinder: GÖPPERT, Georg, 77756 Hausach (DE)
(86) Internationale Anmeldenummer: PCT/DE2015/200480
(87) Internationale Veröffentlichungsnummer: WO 2016/078652

(56) Entgegenhaltungen:
- DE-A1-102006 045 858
- DE-A1-102011 080 716
- DE-A1-102011 107 232
- DE-A1-102012 207 825
- DE-A1-102012 210 201

## Beschreibung

Die Erfindung betrifft ein Verfahren zur Adaption eines Reibwertes einer automatisierten Kupplung, bei welchem ein aktueller Reibwert durch einen Abgleich gegen ein Moment des Verbrennungsmotors während einer schlupfenden Phase der Kupplung bestimmt wird.

In automatisierten Kupplungsanwendungen, wie auch in Doppelkupplungs- und Mehrfachkupplungsanwendungen ist eine genaue Kenntnis des Kupplungsmomentes für die Schalt- bzw. Anfahrqualität eines Kraftfahrzeuges unabdingbar. Dabei ist die Voraussagbarkeit der Kupplungskennlinie von großem Interesse, da die Steuerung der Kupplung auf Basis dieser Kupplungskennlinie erfolgt, da die typischen Schaltzeiten bzw. Anfahrzeiten der Kupplung unter einer 1 Sekunde liegen, was eine Echtzeitadaption der Kupplungskennlinie nicht zulässt. Die Kupplungskennlinie wird typischerweise durch Tastpunkt und effektiven Reibwert parametrisiert und auch adaptiert. Die Adaption des Reibwertes geschieht hierbei durch Abgleich mit dem Moment des Verbrennungsmotors während schlupfender Phasen der aktiven Kupplung.

Aus der DE 10 2010 024 941 A1 ist ein Verfahren zur Steuerung eines Doppelkupplungsgetriebes mit zwei Teilantriebssträngen, von denen jeder mittels einer Kupplung mit einer Brennkraftmaschine koppelbar ist, bekannt. Im Fahrbetrieb des, das Doppelkupplungsgetriebe umfassenden Fahrzeuges wird ein Tastpunkt der Kupplung unabhängig vom Motormoment ermittelt. Dieser Tastpunkt wird dabei während der Inbetriebnahme des Fahrzeuges bestimmt und dann während des Betriebes des Fahrzeuges adaptiert.

Aus der DE 10 2013 204 831 A1 ist ein Verfahren zur Ermittlung von Parametern einer Kupplung zur Bestimmung eines Tastpunktes bekannt, bei welchem eine Vorspannkraft-Kennlinie ermittelt wird.

Aus der DE 10 2011 107 232 ist ein Verfahren bekannt, bei dem ein regelungstechnischer Beobachter zur fortlaufenden Anpassung eines Reibwertkennfeldes verwendet wird.

Die Adaption des Reibwertes kann nur bei einer beobachtbaren Kupplung erfolgen. Dabei heißt beobachtbar, dass die Kupplung schlupfend betrieben und ein hinreichendes Moment von dieser übertragen wird. In normalen Fahrsituationen des Fahrzeuges gibt es Zeiten, in denen die Kupplung nicht beobachtbar und somit der Reibwert nicht adaptierbar ist. In diesen Zeiten verändert sich die Kupplung durch Abkühlung. Ebenso kann die Kupplung auch bei Stillstand des Fahrzeuges nicht beobachtet werden, obwohl die Abkühlung der Kupplung zu einer Veränderung der Kupplungscharakteristik führen kann.

Der Erfindung liegt die Aufgabe zugrunde, eine Anpassung des Reibwertes auch in solchen Phasen durchzuführen, in welchen die Kupplung des Fahrzeuges nicht beobachtbar ist.

Erfindungsgemäß ist die Aufgabe dadurch gelöst, dass der aktuelle Reibwert in einer nicht schlupfenden Phase der Kupplung auf einen Langzeitreibwert vorgesteuert wird. Dies hat den Vorteil, dass auch Änderungen der Kupplung, die in Abkühlphasen während des Stehens des Fahrzeuges zu einer Veränderung der Kupplungscharakteristik führen, annähernd ausgeglichen werden, da der Reibwert auf den Langzeitreibwert vorgesteuert wird.

Vorteilhafterweise wird der Langzeitreibwert in Abhängigkeit einer Temperatur der Kupplung bestimmt. Dieser Langzeitreibwert wird über die Temperatur der Kupplung gelernt und stellt zuverlässig eine Funktion der Temperatur dar, die somit der Reibwertermittlung und Adaption zugrunde gelegt werden kann.

Der Langzeitreibwert wird während der Vorsteuerphase als annähernd konstant angenommen. Da davon auszugehen ist, dass während der inaktiven Phase der Kupplung schnelle Änderungen in der Umgebung der Kupplung zu großen Abweichungen in der Kupplungskennlinie führen können, wird auch in dieser Phase der aktuelle Reibwert angepasst, wodurch sich die Abweichung des aktuellen der Kupplungskennlinie zugrunde liegenden Reibwertes von dem realen Reibwert nach Abschluss der inaktiven Phase der Kupplung verringert, was eine bessere Ansteuerung der Kupplung erlaubt.

In einer Variante wird eine Geschwindigkeit der Anpassung des aktuellen Reibwertes auf den Langzeitreibwert in Abhängigkeit einer Relaxations- bzw. Abkühlrate in der Kupplung bestimmt. Solche Raten werden empirisch, beispielsweise während des Stehens bzw. des inaktiven Betriebes der Kupplung, ermittelt und können somit der Anpassung des Reibwertes in einer nicht zu beobachtenden Phase der Kupplung zugrunde gelegt werden. Somit wird die Ansteuerung der Kupplung in der nächsten beobachtbaren Phase verbessert.

In einer Weiterbildung wird ein Startwert des aktuellen Reibwertes in Abhängigkeit einer Temperatur der Kupplung zu Beginn der Vorsteuerung bestimmt. Somit wird dem auf den Langzeitreibwert vorzusteuernden aktuellen Reibwert ein Wert zu Beginn der Vorsteuerungsphase vorgegeben, welcher den realen Bedingungen des Kraftfahrzeuges zu diesem Zeitpunkt entspricht.

In einer weiteren Ausführungsform wird ein Startwert des aktuellen Reibwertes in Abhängigkeit einer Abkühldauer der Kupplung während der Vorsteuerphase bestimmt. Auch hier werden typische Kupplungseigenschaften während der Vorsteuerphase berücksichtigt, um am Abschluss der Vorsteuerphase einen aktuellen Reibwert zu haben, welcher annähernd dem realen Reibwert entspricht.

Die Erfindung lässt zahlreiche Ausführungsformen zu. Eine davon soll anhand der in der Zeichnung dargestellten Figuren näher erläutert werden.

Es zeigt:
- Fig. 1: eine Prinzipdarstellung eines Doppelkupplungsgetriebes
- Fig. 2: ein Ausführungsbeispiel des erfindungsgemäßen Verfahrens.

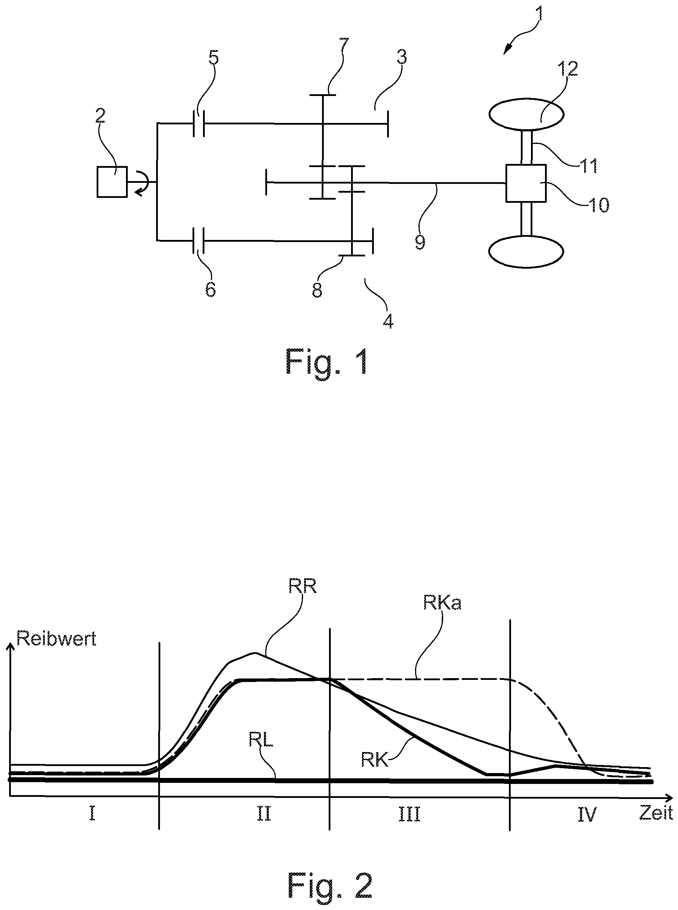

Fig. 1 zeigt eine Prinzipdarstellung eines Doppelkupplungsgetriebes 1, wie es in Kraftfahrzeugen zum Einsatz kommt. Dieses Doppelkupplungsgetriebe 1 ist mit dem Verbrennungsmotor 2 verbunden und weist zwei Teilstränge 3 und 4 auf. Die Verbindung jedes Teilstranges 3, 4 mit dem Verbrennungsmotors 2 erfolgt über jeweils eine Kupplung 5, 6, die von einem nicht näher dargestellten Steuergerät angesteuert werden. Der erste Teilstrang 3 trägt die ungeraden Gänge 7, während der zweite Teilstrang 4 die geraden Gänge 8 umfasst. Die Gänge 7 und 8 sind im Bedarfsfall mit einer Abtriebswelle 9 verbunden, welche über ein Differenzial 10 und eine Radachse 11 die Antriebsräder 12 antreibt.

Bei einem solchen Doppelkupplungsgetriebe 1 wird ein Gang 7 eines Teilstranges 3 mit der Abtriebswelle 9 verbunden, während der Gang 8 des anderen Teilstranges 4 eingelegt wird. Zu diesem Zweck muss das Verhalten der beiden Kupplungen 5, 6 genau eingestellt sein, um Störungen zu vermeiden. Jede Kupplung 5, 6 wird dabei über eine Kupplungskennlinie gesteuert, die in dem Steuergerät abgelegt ist. Ein Parameter der Kupplungskennlinie ist dabei ein Reibwert, welcher laufend im Betrieb des Fahrzeuges adaptiert werden muss.

In Fig. 2 ist ein Beispiel für ein Verhalten eines Reibwertes der Kupplung 5 des Doppelkupplungsgetriebes 1 während des Betriebes eines Kraftfahrzeuges über der Zeit dargestellt. Der Zeitverlauf ist in vier Abschnitte I, II, III, IV unterteilt, wobei die Abschnitte I, II und IV eine Situation des Kraftfahrzeuges wiedergeben, bei welcher die Kupplung 5 beobachtbar ist. Beobachtbar heißt in diesem Zusammenhang, dass die Kupplung 5 in einem Schlupf arbeitet und dabei ein Moment überträgt. Dieses Moment wird während der schlupfenden Phase mit dem Moment des Verbrennungsmotors abgeglichen und daraus ein Kurzzeitreibwert ermittelt, mit welchem die Kupplungskennlinie angepasst wird.

Es werden unterschiedliche Reibwerte betrachtet. Zunächst ist in den einzelnen Abschnitten das Verhalten des real detektierten Reibwertes RR der Kupplung 5 dargestellt. Gleichzeitig ist ein Langzeitreibwert RL, der in Abhängigkeit einer Temperatur ermittelt wird, festgelegt. Dieser Langzeitreibwert RL verläuft im vorliegenden Beispiel annähernd konstant. Im Abschnitt I liegen kontinuierliche Bedingungen an der Kupplung 5 an, so dass der Langzeitreibwert RL und der reale Reibwert RR annähernd gleich verlaufen. In Abhängigkeit des Motormomentes wird ein Kurzzeitreibwert RK adaptiert, welcher der Anpassung der Kupplungskennlinie zugrunde gelegt wird. Dieser Kurzzeitreibwert RK fährt im Abschnitt II, wo ein Leistungseintrag in die Kupplung 5 erfolgt, dem realen Reibwert RR infolge der Adaption hinterher. Auch in diesem Abschnitt II ist der Langzeitreibwert RL konstant und die Kupplung 5 befindet sich im beobachteten Zustand.

Im Abschnitt III wechselt die Kupplung 5 in einen nicht beobachteten Zustand. Dies kann daraus resultieren, dass Energie gespart werden bzw. die Kupplung 5 nicht überhitzt werden soll, weshalb Schlupfphasen auf ein Minimum reduziert werden. So wird bei Konstantfahrten üblicherweise die aktive Kupplung 5 des Doppelkupplungsgetriebes 1 geschlossen und die inaktive Kupplung 6 des Doppelkupplungsgetriebes 1 ist offen oder der Gang ist ausgelegt. Während dieses Abschnittes III, wo die Kupplung 5 nicht beobachtbar ist, ist die Adaption des Reibwertes nicht durchführbar. Deshalb wird in diesem Abschnitt III der Kurzzeitreibwert RK auf den Langzeitreibwert RL vorgesteuert, der auch weiterhin konstant über der Zeit verläuft. Wäre diese Vorsteuerung nicht vorhanden, würde der alte Kurzzeitreibwert RKa in diesem Abschnitt III kontant auf seinem, im zweiten Abschnitt II eingenommenen Niveau weiter verlaufen, was im darauffolgenden Abschnitt IV, in welcher die Kupplung 5 wieder beobachtbar ist, zu großen Abweichungen zwischen realem Reibwert RR und Kurzzeitreibwert RK führen würde. Diese großen Differenzen sind durch die Vorsteuerung des Kurzzeitreibwertes RK auf den Langzeitreibwert RL während dem nicht zu beobachtenden Abschnitt III der Kupplung 5 unterdrückt, so dass im Abschnitt IV, wo die Kupplung 5 wieder beobachtbar ist, eine zuverlässige Adaption des Kurzzeitreibwertes RK in Richtung des realen Reibwertes RR möglich ist. Dabei müssen nur geringfügige Differenzen überbrückt werden.

Die Geschwindigkeit, mit welcher der Kurzzeitreibwert RK auf den Langzeitreibwert RL vorgesteuert wird, wird in Abhängigkeit von, für das Fahrzeug typischen Relaxationsraten der Kupplung 5 ermittelt. Ebenso werden die Startwerte des Kurzzeitreibwertes RK aus der Starttemperatur der Kupplung 5 zu Beginn der Vorsteuerphase III und einer zu erwartenden Abkühldauer der Kupplung 5 während der Vorsteuerphase III ermittelt.

### Bezugszeichenliste

- 1: Doppelkupplungsgetriebe
- 2: Verbrennungsmotor
- 3: Teilstrang
- 4: Teilstrang
- 5: Kupplung
- 6: Kupplung
- 7: Ungerader Gang
- 8: Gerader Gang
- 9: Abtriebswelle
- 10: Differenzial
- 11: Radachse
- 12: Antriebsrad
- RR: realer Reibwert
- RK: Kurzzeitreibwert
- RL: Langzeitreibwert
- RKa: alter Kurzzeitreibwert

## Patentansprüche

1. Verfahren zur Anpassung eines Reibwertes einer automatisierten Kupplung, bei welchem ein aktueller Reibwert (RK) durch einen Abgleich gegen ein Moment des Verbrennungsmotors (2) während einer schlupfenden Phase der Kupplung (5) bestimmt wird, **dadurch gekennzeichnet, dass** der aktuelle Reibwert (RK) in einer nicht schlupfenden Phase der Kupplung (5) auf einen Langzeitreibwert (RL) vorgesteuert wird, wobei der Langzeitreibwert (RL) während der Vorsteuerphase (III) als annähernd konstant angenommen wird.

2. Verfahren nach Anspruch 1, **dadurch gekennzeichnet, dass** der Langzeitreibwert (RL) in Abhängigkeit einer Temperatur der Kupplung (5) bestimmt wird.

3. Verfahren nach Anspruch 1 oder 2, **dadurch gekennzeichnet, dass** eine Geschwindigkeit der Anpassung des aktuellen Reibwertes (RK) auf den Langzeitreibwert (RL) in Abhängigkeit einer Relaxations- bzw. Abkühlrate der Kupplung (5) bestimmt wird.

4. Verfahren nach mindestens einem der vorhergehenden Ansprüche, **dadurch gekennzeichnet, dass** ein Startwert des aktuellen Reibwertes (RK) in Abhängigkeit einer Temperatur der Kupplung (5) zu Beginn der Vorsteuerphase (III) bestimmt wird.

5. Verfahren nach einem der vorhergehenden Ansprüche, **dadurch gekennzeichnet, dass** ein Startwert des aktuellen Reibwertes (RK) in Abhängigkeit einer Abkühldauer der Kupplung (5) während der Vorsteuerphase (III) bestimmt wird.

## Claims

1. Method for adapting a coefficient of friction of an automated clutch, in the case of which method a current coefficient of friction (RK) is determined by way of a calibration with respect to a torque of the internal combustion engine (2) during a slipping phase of the clutch (5), **characterized in that** the current coefficient of friction (RK) is pilot-controlled to a long-term coefficient of friction (RL) in a non-slipping phase of the clutch (5), the long-term coefficient of friction (RL) being assumed to be approximately constant during the pilot control phase (III).

2. Method according to Claim 1, **characterized in that** the long-term coefficient of friction (RL) is determined in a manner which is dependent on a temperature of the clutch (5).

3. Method according to Claim 1 or 2, **characterized in that** a speed of the adaptation of the current coefficient of friction (RK) to the long-term coefficient of friction (RL) is determined in a manner which is dependent on a relaxation rate or cooling rate of the clutch (5).

4. Method according to at least one of the preceding claims, **characterized in that** a starting value of the current coefficient of friction (RK) is determined in a manner which is dependent on a temperature of the clutch (5) at the beginning of the pilot control phase (III).

5. Method according to one of the preceding claims, **characterized in that** a starting value of the current coefficient of friction (RK) is determined in a manner which is dependent on a cooling duration of the clutch (5) during the pilot control phase (III).

## Revendications

1. Procédé pour l'adaptation d'une valeur de friction d'un embrayage automatisé, dans lequel une valeur de friction actuelle (RK) est déterminée par comparaison avec un couple du moteur à combustion interne (2) pendant une phase de patinage de l'embrayage (5), **caractérisé en ce que** la valeur de friction actuelle (RK) est pilotée dans une phase de non-patinage de l'embrayage (5) à une valeur de friction à long terme (RL), la valeur de friction à long terme (RL) étant supposée approximativement constante pendant la phase de pilotage (III).

2. Procédé selon la revendication 1, **caractérisé en ce que** la valeur de friction à long terme (RL) est déterminée en fonction d'une température de l'embrayage (5).

3. Procédé selon la revendication 1 ou 2, **caractérisé en ce que** la vitesse de l'adaptation de la valeur de friction actuelle (RK) à la valeur de friction à long terme (RL) est déterminée en fonction d'un taux de relaxation ou de refroidissement de l'embrayage (5).

4. Procédé selon au moins l'une quelconque des revendications précédentes, **caractérisé en ce qu'**une valeur initiale de la valeur de friction actuelle (RK) est déterminée en fonction d'une température de l'embrayage (5) au début de la phase de pilotage (III).

5. Procédé selon l'une quelconque des revendications précédentes, **caractérisé en ce qu'**une valeur initiale de la valeur de friction actuelle (RK) est déterminée en fonction d'une durée de refroidissement de l'embrayage (5) pendant la phase de pilotage (III).
